# EUROPÄISCHE PATENTSCHRIFT

(11) **EP 1 414 270 B1**
(45) Veröffentlichungstag und Bekanntmachung des Hinweises auf die Patenterteilung: **23.08.2006**
(21) Anmeldenummer: 03026777.7
(22) Anmeldetag: 21.11.2003
(51) Int. Cl.: H04R 25/00, E05D 7/10

(54) **Gehäuse für eine Hörhilfe oder ein Hörgerät**
Housing for a hearing prosthesis or a hearing aid
Boîtier pour un appareil auditif ou une prothèse auditive

(43) Veröffentlichungstag der Anmeldung: 28.04.2004
(73) Patentinhaber: PHONAK AG, 8712 Stäfa (CH)
(72) Erfinder: Gabathuler, Bruno, 8712 Stäfa (CH)
(74) Vertreter: Troesch Scheidegger Werner AG

(56) Entgegenhaltungen:
- EP-A- 1 349 422
- US-A- 4 570 290
- US-A- 4 831 655

## Beschreibung

Die vorliegende Erfindung betrifft ein Gehäuse nach dem Oberbegriff von Anspruch 1.

Herkömmlicherweise wird beim Aufbau von Gehäusen von Hörhilfen resp. Hörgeräten eine Grundplatte resp. Faceplate eingesetzt, an welches einerseits die Schale, d.h. die äussere Gehäusewand, und andererseits die elektronischen Bauelemente angeordnet werden.

So wird beispielsweise bei Im-Ohr-Hörgeräten eine Grundplatte verwendet, an welche die individuell für den jeweiligen Träger angepasste Schale befestigt wird. In der Regel erfolgt die Befestigung zwischen der Grundplatte und der an den Träger des Hörgerätes angepassten Schale mittels Verklebung resp. Verschweissung oder durch Herstellung in Lasersintering oder Stereolithographie ganzer Gehäuse für Im-Ohr-Hörgeräte. Die Grundplatte weist dabei eine Öffnung auf, in welche die komplette Elektronik des Gerätes vorteilhaft in Modulform eingesetzt resp. eingeklinkt wird. In diesem Modul ist in der Regel ebenfalls das Batteriefach integriert, welches einen über eine Achse schwenkbar ausgebildeten Batteriedeckel aufweist. Damit lässt sich einfach die Batterie, welche der Versorgung des Moduls mit Energie dient, auswechseln. Diese Auswechslung kann sowohl von Fachleuten wie auch vom Träger des Hörgerätes selbst erfolgen. Der Vorteil dieser Konstruktion liegt darin, dass ein einheitliches Modul für unterschiedliche, in der Regel individuell gefertigte Hörgeräte, eingesetzt werden kann.

Dabei werden allerdings bedingt durch die Integration der Achse des Batteriedeckels im resp. auf dem Modul alle Kräfte beim Manipulieren des Deckels, beispielsweise beim Schliessen oder Öffnen des Deckels, auf das Modul übertragen. Diese Kräfte können einerseits die elektronischen Komponenten des Moduls direkt beschädigen und andererseits die elektrischen Verbindungen zwischen diesen Komponenten beschädigen. Insbesondere die Kontakte, Leiterbahnen und Drähte des Moduls sind sehr empfindlich auf derartige mechanische Krafteinflüsse.

Die Aufgabe der vorliegenden Erfindung bestand darin, eine Gehäusekonstruktion für Hörhilfen resp. Hörgeräte zu finden, welche verhindert, dass Kräfte über den geöffneten Batteriedeckel auf die Hauptplatine resp. das Elektronikmodul der Hörhilfe resp. des Hörgerätes übertragen werden.

Diese Aufgabe wird erfindungsgemäss durch ein Gehäuse mit den Merkmalen nach Anspruch 1 gelöst.

Weitere erfindungsgemässe Ausführungsformen ergeben sich aus den Merkmalen der Ansprüche 2 bis 6.

Dadurch, dass die Achse für den Deckel nicht fest oder direkt mit dem Elektronikmodul verbunden ist, sondern über die auf der Achse verschiebbar angeordneten Buchsen mit dem Grundkörper verbindbar ist, werden die über den Deckel auf die Achse übertragenen Kräfte vorteilhaft nicht auf das Elektronikmodul sondern auf den Grundkörper übertragen. Damit bleibt das Elektronikmodul praktisch kräftefrei und die daran resp. darauf angeordneten elektronischen Komponenten können dadurch nicht beeinträchtigt oder beschädigt werden. Dennoch kann das Elektronikmodul in den Grundkörper eingesetzt und ggf. auch wieder daraus entfernt werden, falls es ersetzt oder repariert werden sollte.

Vorteilhaft weist das Elektronikmodul zur Durchführung der Enden der Achse beidseits einer Öffnung für den Deckel Bohrungen auf, welche einen grösseren Durchmesser aufweisen als der Durchmesser der Achse. Dabei ist der Durchmesser gleich gross oder grösser als der Durchmesser der Endbereiche der Büchsen. Damit können die Büchsen leicht durch diese Bohrungen hindurch nach Aussen zum Grundkörper hin verschoben werden. Wenn bevorzugterweise zwischen der Bohrung und der Achse ein Spiel besteht, so wird der Kraftschluss zwischen Büchse und Elektronikmodul unterbrochen und damit zuverlässig keine axialen und radialen Kräfte von der Achse über die Büchse auf das Elektronikmodul übertragen.

Die Büchsen können vorzugsweise jeweils ein Anschlagelement, vorzugsweise in Form einer Rippe aufweisen, welches gegen einen entsprechend ausgebildeten Anschlag, vorzugsweise die Fläche einer Ausnehmung, axial bezüglich der Achse in Anschlag bringbar ist.

Vorzugsweise bestehen die Büchsen aus Kunststoff, Keramik oder Metall. Sie weisen damit sowohl eine hohe Festigkeit wie auch gute Gleiteigenschaften bezüglich der Achse auf.

Vorzugsweise sind die Ausnehmungen resp. Bohrungen der Grundplatte innerhalb der Grundplatte oder in einem nach Aussen abstehenden Wulst der Grundplatte ausgebildet. In diesem Bereich kann die Grundplatte auch Verstärkungen aufweisen, um die Kräfte optimal aufzunehmen.

Weiter wird gemäss Anspruch 7 ein Hörgerät resp. Hörhilfe mit einem Gehäuse nach einem der Ansprüche 1 bis 6 beansprucht.

Weiter wird gemäss Anspruch 8 die Verwendung eines erfindungsgemässen Gehäuses nach einem der Ansprüche 1 bis 6 für Hörhilfen oder Hörgeräte, vorzugsweise für Im-Ohr-Hörgeräte beansprucht. Gerade bei Im-Ohr-Hörgeräten ist die beanspruchte Gehäuseanordnung von Vorteil, da sie sich einfach in sehr kleinen Dimensionen ausführen lässt, wie sie bei diesem Typ von Hörgeräten vorkommen.

Ein Ausführungsbeispiel der Erfindung wird nachstehend anhand der Zeichnungen noch näher erläutert. Es zeigen
Fig. 1 die Ansicht eines erfindungsgemäss ausgebildeten Gehäuses im Bereich des eingesetzten Elektronikmoduls;
Fig. 2 die Ansicht des Gehäuses gemäss Figur 1 mit den Büchsen in der Einsetzposition;
Fig. 3 die Ansicht nach Figur 2 mit den Büchsen in der ersten Einschiebposition; und
Fig. 4 die Ansicht nach Figur 2 mit der Büchse in der fertig eingeschobenen Position.

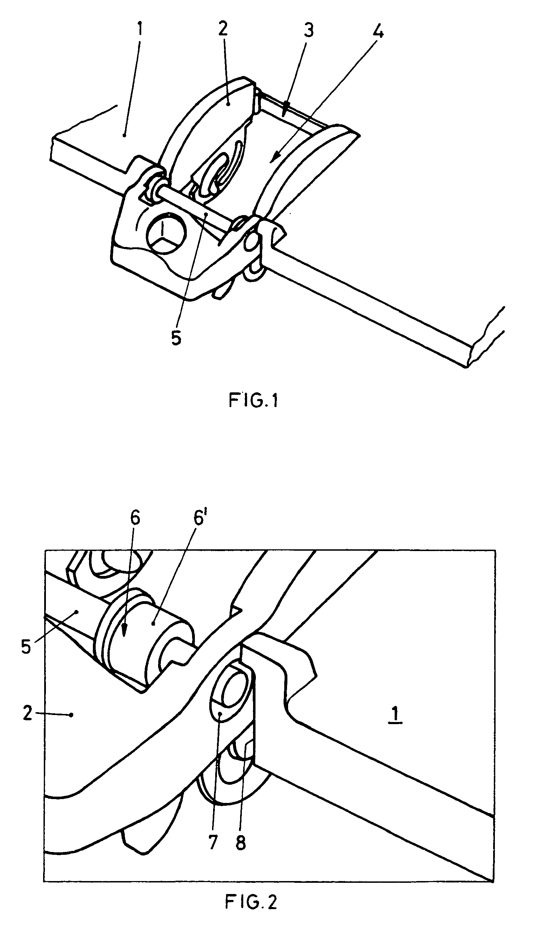

In Figur 1 ist die Ansicht auf den Bereich eines Gehäuses für Hörhilfen resp. Hörgeräte mit in die Grundplatte 1 eingesetztem Elektronikmodul 2 dargestellt. Die Grundplatte 1 ist rein schematisch als gerader Abschnitt dargestellt, kann aber selbstverständlich auch jede andere geeignete Form aufweisen. Insbesondere kann die äussere Schale des Gehäuses der Hörhilfe die Form des Innenohres aufweisen und die Grundplatte den von Aussen sichtbare resp. nach Aussen aus dem Gehörgang weisenden Teil des Gehäuses bilden.

Das Elektronikmodul 2 wird in eine in der Grundplatte 1 ausgebildeten Öffnung 3 eingeführt, womit die elektronischen Bauteile des Elektronikmoduls 2 in das Gehäuseinnere der Hörhilfe zu liegen kommen. Gegen Aussen weist auch das Elektronikmodul 2 eine Öffnung 4 auf, welche durch einen schwenkbar angeordneten Deckel (der Übersichtlichkeit halber nicht dargestellt) verschlossen werden kann. In diese Öffnung 4 wird eine Batterie, idR eine Knopfzelle, eingesetzt, welche die elektronischen Komponenten des Elektronikmoduls 2 mit Energie versorgt. Um die Batterie bei Bedarf einfach austauschen zu können, ist der schwenkbar angeordnete Deckel vorgesehen.

Der Deckel wird an der Achse 5 befestigt, welche quer zur Öffnung 4 verlaufend am Elektronikmodul 2 angeordnet ist. Bei herkömmlichen Elektronikmodulen 2 ist diese Achse 5 direkt in das Elektronikmodul 2 integriert, womit die beim Öffnen und Schliessen über den Deckel auf die Achse wirkende Kräfte nachteilig direkt auf das Elektronikmodul 2 übertragen werden.

Das erfindungsgemässe Gehäuse weist nun an beiden Enden der Achse 5 positionierte Büchsen 6 auf, wie dies aus der Darstellung nach Figur 2 hervorgeht. Die Achse 5 weist dabei vorzugsweise eine maximale Länge auf, welche der Breite des Elektronikmoduls 2 im Bereich der Achse 5 entspricht. Damit lässt sich das Elektronikmodul 2 einfach in die Öffnung 3 der Grundplatte 1 einschieben resp. einstecken. Vorzugsweise ist am Elektronikmodul 2 oder der Grundplatte 1 ein Vorsprung oder Anschlag ausgebildet, welcher die endgültige Einstecktiefe des Elektronikmoduls 2 definiert.

Weiter weist das Elektronikmodul 2 im Durchgangsbereich der Achse 5 eine durchgehende Bohrung 7 auf, welche mindestens dem äusseren Durchmesser des äusseren Bereiches 6' der Büchse 6 entspricht, und einen grösseren Durchmesser aufweist als der Durchmesser der Achse 5. Gegenüber den Stirnseiten der Achse 5 sind weiter in der Grundplatte 1 Öffnungen oder Bohrungen 8 ausgebildet, welche dem Durchmesser des äusseren Bereiches 6' der Büchse 6 entsprechen.

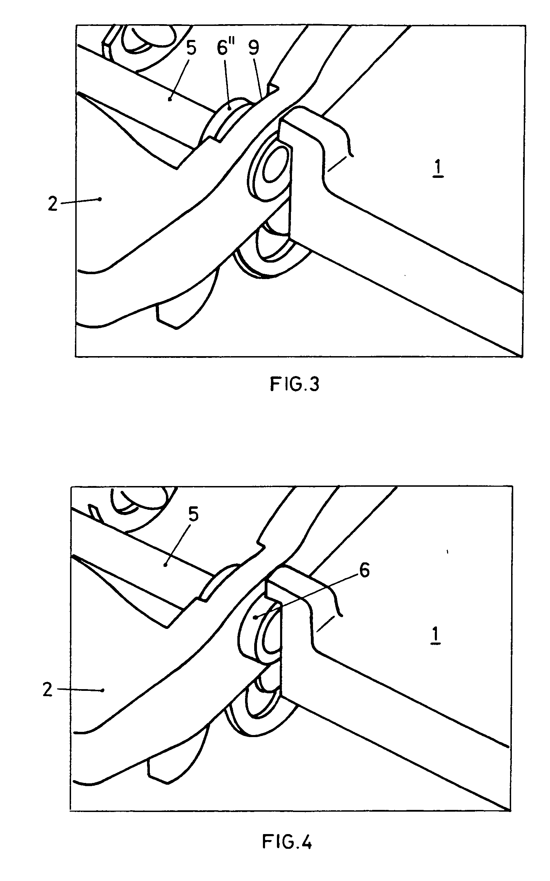

Damit lassen sich die Büchsen 6 axial entlang der Achse 5 nach Aussen in den Bereich des Elektronikmoduls 2 verschieben, wie dies aus Figur 3 hervorgeht.

Schliesslich lassen sich die Büchsen 6 axial bis an ihren Anschlag noch weiter nach Aussen verschieben, wie dies in Figur 4 dargestellt ist. Dadurch kommt der äussere Bereich der Büchse 6 in die Öffnung 8 der Grundplatte 1 zu liegen. Damit können die radialen und axialen Komponenten der auf die Achse 5 wirkenden Kräfte auf die Grundplatte 1 übertragen werden und das Elektronikmodul 2 bleibt vorteilhaft praktisch frei vom Einfluss dieser Kräfte.

Der innere Bereich der Büchse 6 weist als Anschlag eine Rippe 6" auf. Diese gelangt in axialer Richtung gegen die Innenfläche einer entsprechenden Ausnehmung 9 der Grundplatte 1 in Anschlag und fixiert damit das Elektronikmodul 2 in der Grundplatte 1.

Durch diese erfindungsgemässe Anordnung lassen sich einerseits die auf die Achse 5 wirkenden Kräfte in die Grundplatte 1 leiten und damit das Elektronikmodul 2 praktisch kräftefrei halten und andererseits wird damit gleichzeitig eine Fixierung resp. Verriegelung des Elektronikmoduls 2 in der Grundplatte bewirkt.

## Patentansprüche

1. Gehäuse einer Hörhilfe oder eines Hörgerätes mit einer Grundplatte (1), einer damit verbundenen Gehäuseschale und mit einem Elektronikmodul (2), wobei das Elektronikmodul (2) mindestens eine Halteeinrichtung zur Aufnahme einer Batterie aufweist, welche einen über eine Achse (5) verschwenkbaren Deckel aufweist, **dadurch gekennzeichnet, dass** die Achse (5) zwei axial über ihr jeweiliges Ende hinaus verschiebbare Büchsen (6) aufweist, welche in entsprechend ausgebildete Ausnehmungen oder Bohrungen (8) der Grundplatte (1) einschiebbar sind, und damit die Achse mit der Grundplatte (1) verbinden.

2. Gehäuse nach Anspruch 1, **dadurch gekennzeichnet, dass** das Elektronikmodul (2) zur Durchführung der Enden der Achse (5) beidseits einer Öffnung (4) für den Deckel Bohrungen (7) aufweist, welche einen grösseren Durchmesser aufweisen als der Durchmesser der Achse (5), wobei der Durchmesser gleich gross oder grösser als der Durchmesser der Endbereiche (6') der Büchsen (6) ist.

3. Gehäuse nach Anspruch 1 oder 2, **dadurch gekennzeichnet, dass** die Büchsen (6) jeweils ein Anschlagelement, vorzugsweise in Form einer Rippe (6'') aufweisen, welches gegen einen entsprechend ausgebildeten Anschlag, vorzugsweise die Fläche einer Ausnehmung (9), axial bezüglich der Achse (5)in Anschlag bringbar ist.

4. Gehäuse nach einem der Ansprüche 1 bis 3, **dadurch gekennzeichnet, dass** die Büchsen (6) aus Kunststoff, Keramik oder Metall bestehen.

5. Gehäuse nach einem der Ansprüche 1 bis 4, **dadurch gekennzeichnet, dass** die Ausnehmungen oder Bohrungen (8) der Grundplatte innerhalb der Grundplatte (1) ausgebildete sind oder in einem nach Aussen abstehenden Wulst der Grundplatte (1) ausgebildet sind.

6. Gehäuse nach einem der Ansprüche 1 bis 5, **dadurch gekennzeichnet, dass** die Büchsen (6) in vollständig eingeschobener Position zumindest bereichsweise durch Bereiche des Deckels in geschlossener Position abgedeckt sind, so dass ein axiales Verschieben in Richtung des Deckels verhindert wird.

7. Hörgerät oder Hörhilfe mit einem Gehäuse nach einem der Ansprüche 1 bis 6.

8. Verwendung eines Gehäuses nach einem der Ansprüche 1 bis 6 für Hörhilfen oder Hörgeräte, vorzugsweise für Im-Ohr-Hörgeräte.

## Claims

1. Housing of a hearing aid or hearing device with a base plate (1), a shell connected with the base plate (1) and an electronic module (2), whereby the electronic module (2) consists at least of a clamping device to hold the battery consisting of a cap pivotable over an axis (5), **characterized in that** the axis (5) consists of two bushes (6) axially relocatable beyond each end and insertable into accordingly provided openings or bores (8) of the base plate (1), thereby connecting the axis with the base plate (1) .

2. Housing according claim 1, **characterized in that** the electronic module (2) consists of bores (7) for the lead-through of the ends of the axis (5) on both sides of an opening for the cap, which have a larger diameter than the diameter of the axis (5), whereby the diameter is equal or larger as the diameter of the end areas (6') of the bushes (6).

3. Housing according claim 1 or 2, **characterized in that** the bushes (6) consist each of a stop element, preferably in form of a rib (6"), which element may be brought in axial direction with respect to the axis (5) into contact against a correspondingly accomplished catch, preferably the surface of an opening (9).

4. Housing according to one of claims 1 to 3, **characterized in that** the bushes (6) consist of plastic, ceramic or metal.

5. Housing according to one of claims 1 to 4, **characterized in that** the openings or bores (8) of the base plate are preferably arranged within the base plate (1) or in a beaded rim distant to the outside of the base plate (1).

6. Housing according to one of claims 1 to 5, **characterized in that** the bushes (6) in its fully inserted positions are covered at least partially by areas of the cap in its closed position, preventing any axial movement in direction of the cap.

7. A hearing device or hearing aid with a housing according to claims 1 to 6.

8. The use of a housing according to claims 1 to 6 for hearing aids or hearing devices, preferably for in-the-ear hearing devices.

## Revendications

1. Boîtier pour un appareil auditif ou une prothèse auditive avec une carcasse (1), une coquille connecté avec la carcasse (1) et un module électronique (2), le module électronique (2) comporte au moins d'un crochet pour retenir une batterie consistant d'un couvercle être pivotant autour d'un axe (5), **caractérisé en ce que** l'axe (5) consiste en deux boîtes (6) décalable axialement au-delà de leurs extrémités et apte pour être entrer dans des apertures ou perçages (8) de la carcasse (1) et par conséquent attachant l'axe avec la carcasse (1).

2. Boîtier selon la revendication 1, **caractérisé en ce que** le module électronique (2) comporte des perçages (7) dans les deux cotés d'un aperture (4) pour le couvercle pour le conduit des extrémités des axes (5), ces perçages ayant un diamètre plus grand que le diamètre de l'axe (5), cependant que le diamètre et pareille ou plus grand que le diamètre des parties d'extrémités (6') des boîtes (6).

3. Boîtier selon la revendication 1 ou 2, **caractérisé en ce que** les boîtes (6) comportent chacun un élément de butée, préféré en forme d'une nervure (6' '), qui est apte d'être amener en contact contre une butée conformément arrangé en direction axiale en respect avec l'axe (5), de préférence contre une surface de l'aperture (9).

4. Boîtier selon une des revendications 1 à 3, **caractérisé en ce que** les boîtes (6) consistent en plastique, céramique ou métal.

5. Boîtier selon une des revendications 1 à 4, **caractérisé en ce que** les apertures ou perçages (8) de la carcasse sont formés à l'intérieure de la carcasse (1) ou sont arrangés dans un bourrelet s'éloignant par l'extérieur de la carcasse (1).

6. Boîtier selon une des revendications 1 à 5, **caractérisé en ce que** les boîtes (6) dans leur positions complètement inséré sont couvert au moins partiellement par des parties du couvercle dans son position fermé, alors qu'une décalage axiale dans la direction du couvercle va être éviter.

7. Appareil auditif ou prothèse auditive avec un boîtier selon une des revendications 1 à 6.

8. Utilisation d'un boîtier selon les revendications 1 à 6 pour des appareil auditif ou prothèse auditive, de préférence pour des prothèse auditive à porter dans les oreilles.
